(19) Europäisches Patentamt

European Patent Office

Office européen des brevets

(11) **EP 2 621 958 B1**

(12) **EUROPEAN PATENT SPECIFICATION**

(45) Date of publication and mention
of the grant of the patent:
**15.04.2015 Bulletin 2015/16**

(51) Int Cl.:
***C08C 1/00*** *(2006.01)*

(21) Application number: **10858004.4**

(22) Date of filing: **30.09.2010**

(86) International application number:
**PCT/US2010/051013**

(87) International publication number:
**WO 2012/044318 (05.04.2012 Gazette 2012/14)**

(54) **RUBBER COMPOSITION FOR BARRIER LAYER**

KAUTSCHUKZUSAMMENSETZUNG FÜR EINE BARRIERESCHICHT

COMPOSITION DE CAOUTCHOUC POUR COUCHE BARRIÈRE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**07.08.2013 Bulletin 2013/32**

(73) Proprietors:
• **MICHELIN Recherche et Technique S.A.
1763 Granges-Paccot (CH)**
• **Compagnie Générale des Etablissements
Michelin
63000 Clermont-Ferrand (FR)**

(72) Inventor: **BERGMAN, Brian, R.
Simpsonville
SC 29680 (US)**

(74) Representative: **Dossmann, Gérard
Casalonga & Partners
Bayerstrasse 71-73
80335 München (DE)**

(56) References cited:
**WO-A1-2008/118174      US-A- 5 576 372
US-A- 6 062 283        US-A1- 2004 253 403
US-A1- 2009 038 728    US-A1- 2009 308 517
US-A1- 2010 024 941    US-A1- 2010 139 829
US-B1- 6 232 389**

• **CABLE C.: 'Polyepichlorohydrin Elastomers'
HYDRIN ECO, [Online] 23 September 2005,
LOUISVILLE, KY, pages 1 - 19, XP055081140
Retrieved from the Internet: <URL:http:
//www.zeonglobalsolutions.com/lib /pdf/
Polyepichlorohydrin_%20Elastomers.pdf>
[retrieved on 2010-11-19]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

This invention relates generally to gas-inflated articles and more specifically, to barrier layers within the inflated articles that decrease the diffusion of the gas from the article.

Description of the Related Art

Various articles such as tires are constructed to hold air or other gas under pressure. Often these articles are made from a polymeric material having some elastic properties but typically also remain slightly permeable to gases. If left unchecked, the gas permeability of the inflated article will cause the article to deflate over time.

It is therefore often advantageous for inflatable articles to contain a barrier layer that reduces gas permeability and inhibits oxygen travel through the article. For tires, the barrier layer if often an inner tube or an innerliner made of a material that better retains the inflation gas. Rubbery copolymers containing a majority of isobutylene units, such as butyl rubbers, are well known for their ability to retain inflation gas over other materials and are therefore particularly desired for use as inner tubes and tire innerliners. However, the tire industry still strives to find materials having improved properties for the manufacture of inner tubes and innerliners.

SUMMARY OF THE INVENTION

Embodiments include a barrier layer for an inflatable article and inflatable articles having a barrier layer. In an embodiment, a barrier layer is provided for impeding the flow of inflation gas through an inflatable article, the barrier layer constructed of a material that is based upon a cross-linkable rubber composition, the cross-linkable rubber composition comprising, per 100 parts by weight of rubber (phr), between 50 phr and 90 phr of a butyl rubber and between 10 phr and 50 phr of a total amount of a GCO copolymer comprising epichlorohydrin derived units and allyl glycidyl ether derived units and a GECO terpolymer comprising epichlorohydrin derived units, allyl glycidyl ether derived units and ethylene oxide derived units, wherein the GECO terpolymer is between 1 percent by weight and 50 percent by weight of the GCO and GECO total.

The cure system for the rubber composition is a sulfur cure system.

The foregoing and other objects, features and advantages of the invention will be apparent from the following more detailed descriptions of particular embodiments of the invention.

DETAILED DESCRIPTION OF PARTICULAR EMBODIMENTS

Particular embodiments of the present invention include barrier layers such as innerliners and/or inner tubes for tires and other inflatable articles. Other embodiments include the inflatable articles themselves, the rubber compositions making the barrier layers and their methods of manufacture. In an embodiment, the barrier layers are manufactured from rubber compositions that include a butyl rubber, a copolymer of epichlorohydrin rubber and a terpolymer of epichlorohydrin rubber.

Surprisingly it has been determined that the addition of a small amount of the terpolymer of the epichlorohydrin rubber balances the compromise between two desired characteristics of a barrier layer: hysteresis and air impermeability. Hysteresis is a desired characteristic because a tire having a barrier layer made of a material having a lower hysteresis results in a tire having a lower rolling resistance, which is more energy efficient. Gas impermeability is a desired characteristic because an inflatable article having a low permeability barrier layer can better retain its inflation gases over a period of time.

When incorporated into the wall of an elastomeric article, a barrier layer reduces the gas, vapor, and/or chemical permeability of the article and thereby not only improves the performance of the article by inhibiting gases from leaking out of the article, but also may protect the article from other damage, *e.g.,* oxidation due to oxygen migration.

As used herein, "polymer" may be used to refer to homopolymers, copolymers, interpolymers, terpolymers, etc. Likewise, a copolymer may refer to a polymer comprising at least two monomers, optionally with other monomers. A terpolymer is a copolymer having three distinct monomers.

As used herein, when a polymer is referred to as comprising a monomer, the monomer is present in the polymer in the polymerized form of the monomer or in the derivative form the monomer.

As used herein, "elastomer" or "elastomeric composition" refers to any polymer or composition of polymers (such as blends of polymers) consistent with the ASTM D1566 definition. The terms may be used interchangeably with the term "rubber."

As used herein, "phr" is 'parts per hundred rubber' and is a measure common in the art wherein components of a composition are measured relative to a major elastomer component, based upon 100 parts by weight of the elastomer(s) or rubber(s).

As used herein, "based upon" is a term that recognizes embodiments of the present invention are made of vulcanized or cured rubber compositions that were, at the time of their assembly, uncured. The cured rubber composition is therefore "based upon" the uncured rubber composition. In other words, the cross-linked rubber composition is based upon the cross-linkable rubber composition.

The rubber compositions disclosed herein that are useful for barrier layers include three different elastomers that balance the impermeability and the rolling resistance of the barrier layer. The three different elastomers in an embodiment of the barrier layer are a butyl rubber, a copolymer of epichlorohydrin rubber and a terpolymer of epichlorohydrin rubber.

Butyl rubber is often used for inner liners and inner tubes in pneumatic tires because of its low permeability characteristic, *i.e.,* it can significantly reduce the amount of inflation gases that pass through the barrier layer over a period of time. It is not, however, well characterized as having low hysteresis, a property that would result in providing low rolling resistance in a tire. Butyl rubber is a copolymer of isobutylene with small amounts of isoprene. Typically butyl rubber comprises more than 90 mole percent of isobutylene derived units and less than 10 mole percent of isoprene derived units.

Butyl rubber is also useful in its halogenated form. Halogenated butyl rubber may include, for example, a chlorobutyl rubber or a bromobutyl rubber. Halogenated butyl rubbers are well known in the industry and are produced by reacting chlorine or bromine with a butyl rubber in a continuous process. Bromobutyl and chlorobutyl rubbers are available, for example, from Lanxess with offices in Fairlawn, Ohio.

The other elastomers making up the rubber composition useful for a barrier layer as disclosed herein include epichlorohydrin-based elastomers. Epichlorohydrin-based elastomers exist, for example, as a homopolymer of epichlorohydrin derived units (ECH) or as a copolymer of ECH and allyl glycidyl ether derived units (AGE). They may also exist as a copolymer of ECH and ethylene oxide derived units (EO) or as a terpolymer of ECH, EO and AGE.

The American Society of Testing and Materials (ASTM) has designated each of these types of polymers under ASTM D1418 as follows: the homopolymer is designated CO; the copolymer ECH/AGE is designated GCO; the copolymer ECH/EO is designated ECO; and the terpolymer ECH/EO/AGE is designated GECO.

Exemplary epichlorohydrin-based homopolymers, or CO polymers, may be described as consisting of 100 wt. % ECH with about 38% wt. % Cl. Exemplary GCO polymers may include 92 wt. % ECH with 35 wt. % Cl and 8 wt. % AGE. Exemplary ECO polymers may include 68 wt. % ECH with 26 wt. % Cl and 32 wt. % EO. Exemplary GECO polymers may include 65-76 wt. % ECH with 24-29 wt. % Cl, 13-31 wt. % EO and 2-12 wt. % AGE. An advantage of the AGE-containing GCO and GECO type polymers is that they can be readily cured by sulfur and peroxide vulcanization systems because the AGE introduces unsaturation into the polymer as a side chain.

As noted before, it is the addition of a GCO and a GECO elastomer that balance or break the compromise between the hysteresis and gas permeation properties of the barrier layer. Often in rubber compounding, a rubber composition is formulated to obtain an improved physical property of the new rubber composition but in so doing, yields on the characteristic of another desirable property. Such result is recognized as a compromise, *i.e.,* to obtain the desired improvement in one physical property of the rubber composition, another physical property will degrade.

It is known to include CO polymers and/or GCO polymers in a barrier layer composition because of their excellent air permeation properties, which are better than butyl rubber. Often they are included as a majority of the elastomer in the barrier layer. However, GECO polymers do not have the same air permeation properties and are quite permeable compared to butyl rubber. Of course, an embodiment of the rubber composition disclosed herein includes all three elastomers: a butyl rubber in the majority with both a GCO and a GECO polymer.

Surprisingly it has been found that the addition of a relatively small amount of a GECO terpolymer along with a GCO copolymer and a butyl rubber provides a superior rubber composition for forming a barrier layer having the desired physical properties of both low hysteresis and improved air impermeability.

An embodiment of the rubber composition for a barrier layer includes between 50 phr and 90 phr of butyl rubber or alternatively between 60 phr and 90 phr, between 80 phr and 90 phr or between 70 phr and 80 phr of butyl rubber. All of the butyl rubber may be halogenated butyl rubber or alternatively, only a portion or none of the butyl rubber may be halogenated. The halogenated butyl rubber may, in an embodiment, be bromobutyl rubber, chlorobutyl rubber or mixtures thereof. In an embodiment, the entire portion of butyl rubber is bromobutyl rubber.

An embodiment of the rubber composition includes a total amount of a GCO copolymer and a GECO terpolymer of between 10 phr and 50 phr or alternatively, between 10 phr and 40 phr, between 10 phr and 20 phr or between 20 phr and 30 phr of the total amount of copolymer and terpolymer.

The amount of GECO terpolymer in an embodiment of the rubber composition, expressed as a weight percent of the total amount of the GECO terpolymer and the GCO copolymer, is between 1 percent by weight and 50 percent by weight of the total. Alternatively the amount of GECO terpolymer, expressed as percent by weight of the total amount of GECO and GCO, is between 5 percent by weight and 40 percent by weight, between 10 percent by weight and 40 percent by weight, between 10 percent by weight and 35 percent by weight between 20 percent by weight and 35 percent by weight, between 5 percent by weight and 35 percent by weight or between 20 percent by weight and 40 percent by weight.

Particular embodiments of the rubber compositions disclosed herein may also include one or more filler components such as calcium carbonate, clay, mica, silica and silicates, talc, titanium dioxide, and carbon black. Such fillers may include permeability reducing mineral fillers that are capable of reducing the gas permeability characteristics of a barrier layer formed from the composition and are, thanks to their form, size or shape factor, generally known as "platy fillers" *(i.e.,* under the form of plates, platelets, layers, stacked layers or platelets, etc).

Examples of platy fillers include silicates, such as phyllosilicates, smectite and vermiculite clay minerals and various other clay materials. Particular examples include kaolin, montmorillonite such as sodium montmorillonite, magnesium montmorillonite, and calcium montmorillonite, nontronite, beidellite, volkonskoite, hectorite, laponite, sauconite, sobockite, stevensite, svinfordite, vermiculite, mica, bentonite, sepeolite, saponite, and the like. Other materials that may be used include micaceous minerals such as illite and mixed layered illite/smectite minerals, such as ledikite and admixtures of illites and the clay minerals described above. Many of these and other layered clays generally comprise particles containing a plurality of silicate platelets having a thickness of 8-12 Å tightly bound together at interlayer spacings of 4 A or less, and contain exchangeable cations such as $Na^+$, $Ca^{+2}$, $K^+$ or $Mg^{+2}$ present at the interlayer surfaces.

The layered platy fillers, such as clay, can be exfoliated by suspending the platy filler in a water solution. As used herein, "exfoliation" refers to the separation of individual layers of the original inorganic particle, so that polymer can surround or surrounds each particle. In an embodiment, sufficient polymer is present between each platelet such that the platelets are randomly spaced. For example, some indication of exfoliation or intercalation may be a plot showing no X-ray lines or larger d-spacing because of the random spacing or increased separation of layered platelets. However, as recognized in the industry and by academia, other indicia may be useful to indicate the results of exfoliation such as permeability testing, electron microscopy and atomic force microscopy.

Preferably, when exfoliating the layered clays, the concentration of clay in water is sufficiently low to minimize the interaction between clay particles and to fully exfoliate the clay. In one embodiment, the aqueous slurry of clay can have a clay concentration of between 0.1 and 5.0 weight percent or alternatively, between 0.1 and 3.0 weight percent. Organoclays can be obtained by using an organic exfoliating agent such as, for example, tertiary amines, diamines, polyamines, amine salts, as well as quaternary ammonium compounds. Exemplary organoclays are available commercially from Southern Clay Products under the trade names CLOISITE 6A, 15A, and 20A, which are natural montmorillonite clays modified with quaternary ammonium salts. CLOISITE 6A, for example, contains 140 meq/100 g clay of dimethyl dihydrogenated tallow quaternary ammonium salts.

In addition to dimethyl-dihydrogenated tallow-quaternary ammonium salts, clays may also be organically modified, for example, with an octadecylamine or a methyl-tallow-bis-2-hydroxyethyl quaternary ammonium salt. Still other examples of useful surfactants that may be used to modify the particles include dimethyl ditallow ammonium, dipolyoxyethylene alkyl methyl ammonium, trioctyl methyl ammonium, polyoxypropylene methyl diethyl ammonium, dimethyl benzyl hydrogenated tallow quaternary ammonium, dimethyl hydrogenated tallow 2-ethylhexyl quaternary ammonium, methyl dihydrogenated tallow ammonium, and the like.

Particular embodiments of the rubber composition disclosed herein include platy fillers such as clay or exfoliated clay that have been organically modified, those that have not been organically modified and combinations thereof. The amount of platy filler incorporated into the rubber composition in accordance with this invention depends generally on the particular particles selected and the materials with which they are mixed. Generally an amount is added that is sufficient to develop an improvement in the mechanical properties or barrier properties of the rubber composition, *e.g.,* tensile strength or oxygen permeability.

For example, the platy fillers may be present in the composition in an amount of between 1 phr and 30 phr, between 1 phr and 25 phr or between 1 phr and 15 phr. In other embodiments, the fillers may be present in amount of between 3 phr and 10 phr, between 2 phr and 8 phr, or between 3 phr and 7 phr. Such total amounts of platy filler may include just the organically modified filler (such as an organoclay), just the non-organically modified filler or mixtures thereof.

In addition to the platy fillers, carbon black and/or silica may also be incorporated into particular embodiments of the rubber composition disclosed herein in quantities sufficient to provide the desired physical properties of the material, e.g., modulus and cohesion. In an embodiment, the silica is a highly dispersible precipitated silica but other silicas may also be used in other embodiments. Such amounts may include, for example, between 10 phr and 150 phr of carbon black and/or silica or alternatively, between 5 phr and 100 phr or between 30 phr and 70 phr of carbon black and/or silica.

Non-limiting examples of useful carbon blacks may include N550, N650, N660, N762, N772 and N990. Non-limiting examples of useful silica include Perkasil KS 430 from Akzo, the silica BV3380 from Degussa, the silicas Zeosil 1165 MP and 1115 MP from Rhodia, the silica Hi-Sil 2000 from PPG and the silicas Zeopol 8741 or 8745 from Huber.

Optionally, an embodiment of the rubber composition disclosed herein may include a plasticizing terpene resin having a relatively high glass transition temperature. A terpene resin may be included for exemplary benefits that may include improving the dispensability of the permeability reducing particles, improving the processability of the composition by lowering the modulus and the viscosity of the composition and further reducing the gas permeability of the material.

Generally, as a plasticizing resin, the terpene resin is solid at ambient temperature, e.g., about 25 °C, and is miscible in the rubber composition at the level used, typically over 5 phr so that it acts as a true diluting agent. Thus, a plasticizing resin should not be confused with a "tackifying" resin, which is generally used at a lower level, e.g., typically less than 5 phr, and is typically immiscible and thus intended to migrate to the surface to give tack to the rubber composition. A useful terpene resin may be unmodified and includes, for example, polylimonene, poly alpha-pinene, poly beta-pinene, or mixtures thereof.

The terpene resin may have a relatively low molecular weight, such as less than about 2000. As described above, terpene hydrocarbon resins for use in particular embodiments of the present invention generally have a relatively high glass transition temperature. For instance, the glass transition temperature of the terpene hydrocarbon resin is greater than about 50°C, and may be greater than about 60°C, or even greater than about 70°C.

The terpene resin should further have a softening point that is compatible with the processing of the other materials contained in the composition. For example, when forming a barrier layer, the terpene resin is mixed, heated, and melted with the other components in the composition. Thus, the terpene resin should have a softening point that is less than the temperature at which other ingredients in the composition, such as the elastomer, begin to degrade and break down. When the elastomer combined with the terpene resin is a butyl rubber, for instance, it is advantageous for the terpene resin to have a softening point of less than about 170°C, such as less than about 140°C. In other applications, however, the softening point of the terpene resin may be higher than the above temperatures. As used herein, the softening point is determined by the "Ring and Ball" method such as described in ASTM E-28.

Commercially available terpene resins that may be used in the present invention include a poly alpha-pinene resin marketed under the name Resin R2495 by Hercules Inc. of Wilmington, DE. Resin R2495 has a molecular weight of about 932, a softening point of about 135°C and a glass transition temperature of about 91°C. Another commercially available product that may be used in the present invention includes DERCOLYTE L120 polylimonene resin sold by the company DRT of France. DERCOLYTE L120 polylimonene resin has a molecular weight of about 877, has a softening point of about 119°C, and has a glass transition temperature of about 73°C. Still another commercially available terpene resin that may be used in the present invention includes SYLVARES 7125 polylimonene resin sold by the Arizona Chemical Company of Jacksonville, FL. SYLVARES 7125 polylimonene resin has a molecular weight of about 102, has a softening point of about 125°C, and has a glass transition temperature of about 73°C.

The amount of terpene resin present in the composition depends upon the particular circumstances and the desired result. In general, for instance, the terpene resin may be present in the composition in an amount from about 1 to about 50 phr, such as from about 1 to about 35 phr. For instance, in one embodiment, the resin may be present in the composition in an amount from about 5 phr to about 20 phr.

The rubber compositions disclosed herein can be cured with a sulfur curing system that typically includes sulfur and an accelerator. Suitable free sulfur includes, for example, pulverized sulfur, rubber maker's sulfur, commercial sulfur, and insoluble sulfur. The amount of free sulfur included in the rubber composition may range between 0.5 and 3 phr or alternatively between 0.8 and 2.5 phr or between 1 and 2 phr.

Use may be made of any compound capable of acting as curing accelerator in the presence of sulfur, in particular those chosen from the group consisting of 2-2'-dithio bis(benzothiazole) (MTBS), diphenyl guanidine (DPG), N-cyclohexyl-2-benzothiazole-sulphenamide (CBS), N,N-dicyclohexyl-2-benzothiazolesulphenamide (DCBS), N-tert-butyl-2-benzo-thiazole-sulphenamide (TBBS), N-tert-butyl-2-benzothiazolesulphen-imide (TBSI) and the mixtures of these compounds.

Other additives can be added to the rubber composition disclosed herein as known in the art. Such additives may include, for example, some or all of the following: antidegradants, antioxidants, fatty acids, pigments, waxes, stearic acid, zinc oxide and other accelerators. Examples of antidegradants and antioxidants include 6PPD, 77PD, IPPD and TMQ and may be added to rubber compositions in an amount of from 0.5 phr and 5 phr. Zinc oxide may be added in an amount of between 1 phr and 6 phr, 1 phr and 4 phr or between 1 phr and 3 phr. Tackifying resins (such as octylphenol formaldehyde resin) can also be included in the rubber composition.

Barrier layers made according to the present invention may be incorporated into numerous articles. An embodiment includes an article having the barrier layer constructed of the rubber composition disclosed herein. For example, in one embodiment, barrier layers made according to the present invention may be incorporated into elastomeric articles that are intended to be inflated with a gas. In these applications, the barrier layer inhibits gas flow through the wall of the article. Particular examples of articles that may incorporate a barrier layer according to the present invention include sports balls such as footballs, basketballs, and the like, flotation devices such as inflatable boats, air mattresses, and the like. Tires also have a need for barrier layers to protect the tires from deflating quickly over time or from damage to the tire internals from oxidation caused by oxygen migrating through the tire from the interior of the tire.

While the barrier layer is typically on the interior wall of the inflated chamber of the article or alternatively made of an inner tube, the barrier layer may also be placed further within the wall of the article. For example, while a tire typically includes a barrier layer disposed on the inner wall of the tire, a barrier layer may also be included within the wall of the tire carcass. Barrier layers for tires as disclosed herein can be used for all types of tires including truck tires, aircraft tires, passenger tires and light truck tires.

The rubber compositions of particular embodiments may be processed in a suitable mixing device such as a BANBURY mixer under conditions of shear sufficient to allow the components to become uniformly dispersed. In a two step process, the elastomers are first masticated to increase their temperature and then all the other components, other than the cure package, are added. The rubber composition is continued to be mixed until a temperature of between about 140 °C and about 180 °C is reached. The mix is then dropped and cooled.

In a second step, the mix is processed on a mill to mix the cure package into the rubber composition.

The resulting rubber composition may be extruded, compression molded, blow molded or injection molded into various shaped articles including innerliners and inner tubes for inflatable articles.

The invention is further illustrated by the following examples, which are to be regarded only as illustrations and not delimitative of the invention in any way. The properties of the compositions disclosed in the examples were evaluated as described below.

Moduli of elongation (MPa) were measured at 10% (MA10), 100% (MA 100) and at 300% (MA300) at a temperature of 23 °C based on ASTM Standard D412 on dumb bell test pieces. The measurement were taken in the second elongation; *i.e.,* after an accommodation cycle. These measurements are secant moduli in MPa, based on the original cross section of the test piece.

Hysteresis losses (HL) were measured in percent by rebound at 60 °C at the sixth impact in accordance with the following equation:

$$HL\ (\%) = 100\ (W_0 - W_1)/W_1,$$

where $W_0$ is the energy supplied and $W_1$ is the energy restored.

Oxygen permeability was measured using a MOCON OX-TRAN 2/60 permeability tester at 40°C. Cured sample disks of measured thickness (approximately 0.8-1.0 mm) were mounted on the instrument and sealed with vacuum grease with 10 psig of nitrogen on one side of the disk and 10 psig of oxygen on the other side. Using a Coulox oxygen detector on the nitrogen side, the increase in oxygen concentration was monitored. The time required for oxygen to permeate through the disk or for the oxygen concentration on the nitrogen side to reach a constant value, was recorded and used to determine the oxygen permeability.

Mooney Plasticity ML (1+4): Mooney Plasticity was measured in accordance with ASTM Standard D1646-04. In general, the composition in an uncured state is molded in a cylindrical enclosure and heated to 100 °C. After 1 minute of preheating, the rotor turns within the test sample at 2 rpm, and the torque used for maintaining this movement is measured after 4 minutes of rotation. The Mooney Plasticity is expressed in "Mooney units" (MU, with 1 MU = 0.83 Newton-meter).

Example 1

Using the two step process described above, elastomer formulations F1-F8 were prepared using the components shown in Table 1. The amount of each component making up the elastomer formulations F1-F8 are provided in Table 1 in parts per hundred parts by weight (phr) of the elastomer.

The first five formulations, F1 through F5, included no platy filler. Formulations F6 and F8 included 7.15 phr of a platy filler, the organoclay CLOISITE 30B. CLOISITE 30B is a natural montmorillonite modified with a quaternary ammonium salt available from Southern Clay Products, Inc. The curative package included zinc oxide, sulfur, accelerator and stearic acid.

The butyl rubber was a brominated butyl rubber. The GCO elastomer was HYDRIN H1100 and the GECO elastomer was HYDRIN T3106, both available from Zeon Chemicals. HYDRIN 1100 and HYDRIN T3106 have an AGE content of between 6.7 and 8.7 wt. % and between 5.9 and 7.0 wt. % respectively. HYDRIN T3106 has a chlorine content of between 20.4 and 22,4 wt. %.

Table 1- Rubber Formulations with Physical Properties

| Elastomer Composition | F1 | F2 | F3 | F4 | F5 | F6 | F7 | F8 |
|---|---|---|---|---|---|---|---|---|
| Butyl Rubber | 100 | | 75 | | 85 | 100 | | 85 |

(continued)

| Elastomer Composition | F1 | F2 | F3 | F4 | F5 | F6 | F7 | F8 |
|---|---|---|---|---|---|---|---|---|
| GCO Polymer | | 100 | 25 | | 10 | | 100 | 10 |
| GECO Polymer | | | | 100 | 5 | | | 5 |
| Carbon Black, N772 | 51 | 51 | 51 | 51 | 51 | 51 | 51 | 51 |
| Platy Filler | | | | | | 7.15 | 7.15 | 7.15 |
| Cure Package | 5.7 | 5.7 | 5.7 | 5.7 | 5.7 | 5.7 | 5.7 | 5.7 |
| | | | | | | | | |
| **Physical Properties** | | | | | | | | |
| Mooney ML (1 + 4) | 61 | 50 | 56 | 56 | 57 | 46 | 53 | n/a |
| MA10, MPa | 2.5 | 4.4 | 4.5 | 4.7 | 4.1 | 3.5 | 7.3 | 4.9 |
| MA100, MPa | 1.0 | 1.97 | 2.51 | 2.76 | 1.91 | 1.29 | 2.65 | 2.14 |
| Hysteresis Loss (%) | 29.1 | 27.6 | 302. | 16.8 | 28.6 | 37.3 | 42.5 | 35.7 |
| Oxygen Permeability, (mm cc) / (m$^2$ day) | 144.5 | 79.8 | 104.3 | 363.3 | 116.4 | 117.8 | 66.9 | 121.0 |
| % Improvement | base | 45 | 28 | -152 | 20 | base | 43 | -3 |

The cured testing plaques were tested as described above to measure their physical properties. The measured physical properties for the plaques obtained from each of the formulations **F1** through **F8** are shown in Table **1**. The percent improvement in oxygen permeability shown in Table **1** for formulations **F2-F5** is the improvement of each formulation over formulation **F1** while the percent improvement for formulations **F7-F8** is the improvement of each formulation over formulation **F6**.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention without departing from its true spirit. The foregoing description is provided for the purpose of illustration only and should not be construed in a limiting sense. Only the language of the following claims should limit the scope of this invention.

## Claims

1. A barrier layer for impeding the flow of inflation gas through an inflatable article, the barrier layer constructed of a material that is based upon a cross-linkable rubber composition, the cross-linkable rubber composition comprising, per 100 parts by weight of rubber (phr):

> between 50 phr and 90 phr of a butyl rubber;
> between 10 phr and 50 phr of a total amount of a GCO copolymer comprising epichlorohydrin derived units and allyl glycidyl ether derived units and a GECO terpolymer comprising epichlorohydrin derived units, allyl glycidyl ether derived units and ethylene oxide derived units, wherein the GECO terpolymer is between 1 percent by weight and 50 percent by weight of the GCO and GECO total;
> a sulfur cure system.

2. The barrier layer of claim 1, wherein the cross-linkable rubber composition further comprises:

    a platy filler.

3. The barrier layer of claim 2, wherein the platy filler is an organo-modified platy filer.

4. The barrier layer of claim 3, wherein the platy filler is an organoclay.

5. The barrier layer of claim 2, wherein the cross-linkable rubber composition comprises between 1 phr and 15 phr of the platy filler.

6. The barrier layer of claim 1, wherein the cross-linkable rubber composition further comprises:

    a plasticizing terpene resin.

7. The barrier layer of claim 1, wherein the cross-linkable rubber composition comprises between 80 phr and 90 phr of the butyl rubber and wherein the GECO terpolymer is between 5 percent by weight and 40 percent by weight of the total.

8. The barrier layer of claim 7, wherein the GECO terpolymer is between 20 percent by weight and 40 percent by weight of the total.

9. The barrier layer of claim 1, wherein the butyl rubber is halogenated.

10. The barrier layer of claim 9, wherein the butyl rubber is bromobutyl rubber.

11. The barrier layer of claim 1, wherein the barrier layer is an inner tube adapted for a pneumatic tire.

12. The barrier layer of claim 1, wherein the barrier layer is adapted for a pneumatic tire.

13. The barrier layer of claim 12, wherein the barrier layer is disposed on an interior surface of the pneumatic tire.

14. A pneumatic tire comprising a barrier layer for impeding the flow of inflation gas through the pneumatic tire, the barrier layer constructed of a material that is based upon a cross-linkable rubber composition, the cross-linkable rubber composition comprising, per 100 parts by weight of rubber (phr):

    between 50 phr and 90 phr of a butyl rubber;
    between 10 phr and 50 phr of a total amount of a GCO copolymer comprising epichlorohydrin derived units and allyl glycidyl ether derived units and a GECO terpolymer comprising epichlorohydrin derived units, allyl glycidyl ether derived units and ethylene oxide derived units, wherein the GECO terpolymer is between 1 percent by weight and 50 percent by weight of the GCO and GECO total;
    a sulfur cure system.

15. The pneumatic tire of claim 14, wherein the cross-linkable rubber composition further comprises:

    a platy filler.

16. The pneumatic tire of claim 14, wherein the cross-linkable rubber composition comprises between 80 phr and 90 phr of the butyl rubber and wherein the GECO terpolymer is between 5 percent by weight and 40 percent by weight of the total.

17. The pneumatic tire of claim 16, wherein the GECO terpolymer is between 20 percent by weight and 40 percent by weight of the total.

18. The pneumatic tire of claim 14, wherein the barrier layer is disposed on an interior surface of the pneumatic tire.

**Patentansprüche**

1. Sperrschicht zum Verhindern des Durchflusses von Aufblasgas durch einen aufblasbaren Artikel, wobei die Sperrschicht aus einem Material aufgebaut ist, das auf einer vernetzbaren Kautschukzusammensetzung beruht, wobei die vernetzbare Kautschukzusammensetzung, auf 100 Gewichtsteile Kautschuk (parts per hundred of rubber - phr), Folgendes umfasst:

   zwischen 50 phr und 90 phr eines Butylkautschuks,
   zwischen 10 phr und 50 phr einer Gesamtmenge eines GCO-Copolymers, das Epichlorhydrin-Derivateinheiten und Allylglycidylether-Derivateinheiten umfasst, und eines GECO-Terpolymers, das Epichlorhydrin-Derivateinheiten, Allylglycidylether-Derivateinheiten und Ethylenoxid-Derivateinheiten umfasst, wobei das GECO-Terpolymer zwischen 1 Gewichtsprozent und 50 Gewichtsprozent der Gesamtheit von GCO und GECO beträgt,
   ein Schwefel-Vulkanisationssystem.

2. Sperrschicht nach Anspruch 1, wobei die vernetzbare Kautschukzusammensetzung ferner Folgendes umfasst:

   einen tafelförmigen Füllstoff.

3. Sperrschicht nach Anspruch 2, wobei der tafelförmige Füllstoff ein organisch modifizierter tafelförmiger Füllstoff ist.

4. Sperrschicht nach Anspruch 3, wobei der tafelförmige Füllstoff ein Organoton ist.

5. Sperrschicht nach Anspruch 2, wobei die vernetzbare Kautschukzusammensetzung zwischen 1 phr und 15 phr des tafelförmigen Füllstoffs umfasst.

6. Sperrschicht nach Anspruch 1, wobei die vernetzbare Kautschukzusammensetzung ferner Folgendes umfasst:

   ein weichmachendes Terpenharz.

7. Sperrschicht nach Anspruch 1, wobei die vernetzbare Kautschukzusammensetzung zwischen 80 phr und 90 phr des Butylkautschuks umfasst und wobei das GECO-Terpolymer zwischen 5 Gewichtsprozent und 40 Gewichtsprozent der Gesamtheit beträgt.

8. Sperrschicht nach Anspruch 7, wobei das GECO-Terpolymer zwischen 20 Gewichtsprozent und 40 Gewichtsprozent der Gesamtheit beträgt.

9. Sperrschicht nach Anspruch 1, wobei der Butylkautschuk halogeniert ist.

10. Sperrschicht nach Anspruch 9, wobei der Butylkautschuk Brombutylkautschuk ist.

11. Sperrschicht nach Anspruch 1, wobei die Sperrschicht ein für einen Luftreifen geeigneter Innenschlauch ist.

12. Sperrschicht nach Anspruch 1, wobei die Sperrschicht für einen Luftreifen geeignet ist.

13. Sperrschicht nach Anspruch 12, wobei die Sperrschicht auf einer Innenfläche des Luftreifens angeordnet ist.

14. Luftreifen, der eine Sperrschicht zum Verhindern des Durchflusses von Aufblasgas durch den Luftreifen umfasst, wobei die Sperrschicht aus einem Material aufgebaut ist, das auf einer vernetzbaren Kautschukzusammensetzung beruht, wobei die vernetzbare Kautschukzusammensetzung, auf 100 Gewichtsteile Kautschuk (phr), Folgendes umfasst:

   zwischen 50 phr und 90 phr eines Butylkautschuks,
   zwischen 10 phr und 50 phr einer Gesamtmenge eines GCO-Copolymers, das Epichlorhydrin-Derivateinheiten und Allylglycidylether-Derivateinheiten umfasst, und eines GECO-Terpolymers, das Epichlorhydrin-Derivateinheiten, Allylglycidylether-Derivateinheiten und Ethylenoxid-Derivateinheiten umfasst, wobei das GECO-Terpolymer zwischen 1 Gewichtsprozent und 50 Gewichtsprozent der Gesamtheit von GCO und GECO beträgt,
   ein Schwefel-Vulkanisationssystem.

**15.** Luftreifen nach Anspruch 14, wobei die vernetzbare Kautschukzusammensetzung ferner Folgendes umfasst:

einen tafelförmigen Füllstoff.

**16.** Luftreifen nach Anspruch 14, wobei die vernetzbare Kautschukzusammensetzung zwischen 80 phr und 90 phr des Butylkautschuks umfasst und wobei das GECO-Terpolymer zwischen 5 Gewichtsprozent und 40 Gewichtsprozent der Gesamtheit beträgt.

**17.** Luftreifen nach Anspruch 16, wobei das GECO-Terpolymer zwischen 20 Gewichtsprozent und 40 Gewichtsprozent der Gesamtheit beträgt.

**18.** Luftreifen nach Anspruch 14, wobei die Sperrschicht auf einer Innenfläche des Luftreifens angeordnet ist.


**Revendications**

**1.** Couche barrière servant à empêcher un gaz de gonflage de passer à travers un article gonflable, laquelle couche barrière est faite d'un matériau qui est à base d'une composition de caoutchouc réticulable, laquelle composition de caoutchouc réticulable comprend, en parties pour 100 parties en poids de caoutchouc (pcpc) :

- de 50 pcpc à 90 pcpc d'un caoutchouc butyl ;
- de 10 pcpc à 50 pcpc, au total, d'un copolymère GCO, comprenant des motifs dérivés de l'épichlorhydrine et des motifs dérivés de l'éther d'allyle et de glycidyle, et d'un terpolymère GECO, comprenant des motifs dérivés de l'épichlorhydrine, des motifs dérivés de l'éther d'allyle et de glycidyle et des motifs dérivés de l'oxyde d'éthylène, étant entendu que le terpolymère GECO représente de 1 % en poids à 50 % en poids du total des GCO et GECO ;
- un système de vulcanisation au soufre.

**2.** Couche barrière conforme à la revendication 1, dans laquelle la composition de caoutchouc réticulable comprend en outre une charge lamellaire.

**3.** Couche barrière conforme à la revendication 2, dans laquelle la charge lamellaire est une charge lamellaire organo-modifiée.

**4.** Couche barrière conforme à la revendication 3, dans laquelle la charge lamellaire est une organo-argile.

**5.** Couche barrière conforme à la revendication 2, dans laquelle la composition de caoutchouc réticulable comprend de 1 pcpc à 15 pcpc de charge lamellaire.

**6.** Couche barrière conforme à la revendication 1, dans laquelle la composition de caoutchouc réticulable comprend en outre une résine terpénique plastifiante.

**7.** Couche barrière conforme à la revendication 1, dans laquelle la composition de caoutchouc réticulable comprend de 80 pcpc à 90 pcpc du caoutchouc butyl et dans laquelle le terpolymère GECO représente de 5 % en poids à 40 % en poids du total.

**8.** Couche barrière conforme à la revendication 7, dans laquelle le terpolymère GECO représente de 20 % en poids à 40 % en poids du total.

**9.** Couche barrière conforme à la revendication 1, dans laquelle le caoutchouc butyl est halogéné.

**10.** Couche barrière conforme à la revendication 9, dans laquelle le caoutchouc butyl est un caoutchouc bromobutyl.

**11.** Couche barrière conforme à la revendication 1, laquelle couche barrière est un tube intérieur adapté pour bandage pneumatique.

**12.** Couche barrière conforme à la revendication 1, laquelle couche barrière est adaptée pour un bandage pneumatique.

**13.** Couche barrière conforme à la revendication 12, laquelle couche barrière est disposée sur la surface interne d'un bandage pneumatique.

**14.** Bandage pneumatique comportant une couche barrière servant à empêcher un gaz de gonflage de passer à travers le bandage pneumatique, laquelle couche barrière est faite d'un matériau qui est à base d'une composition de caoutchouc réticulable, laquelle composition de caoutchouc réticulable comprend, en parties pour 100 parties en poids de caoutchouc (pcpc) :

> - de 50 pcpc à 90 pcpc d'un caoutchouc butyl ;
> - de 10 pcpc à 50 pcpc, au total, d'un copolymère GCO, comprenant des motifs dérivés de l'épichlorhydrine et des motifs dérivés de l'éther d'allyle et de glycidyle, et d'un terpolymère GECO, comprenant des motifs dérivés de l'épichlorhydrine, des motifs dérivés de l'éther d'allyle et de glycidyle et des motifs dérivés de l'oxyde d'éthylène, étant entendu que le terpolymère GECO représente de 1 % en poids à 50 % en poids du total des GCO et GECO ;
> - un système de vulcanisation au soufre.

**15.** Bandage pneumatique conforme à la revendication 14, dans lequel la composition de caoutchouc réticulable comprend en outre une charge lamellaire.

**16.** Bandage pneumatique conforme à la revendication 14, dans lequel la composition de caoutchouc réticulable comprend de 80 pcpc à 90 pcpc du caoutchouc butyl et dans lequel le terpolymère GECO représente de 5 % en poids à 40 % en poids du total.

**17.** Bandage pneumatique conforme à la revendication 16, dans lequel le terpolymère GECO représente de 20 % en poids à 40 % en poids du total.

**18.** Bandage pneumatique conforme à la revendication 14, dans lequel la couche barrière est disposée sur la surface interne du bandage pneumatique.